(19)

**Europäisches Patentamt**
**European Patent Office**
**Office européen des brevets**

(11) **EP 3 559 681 B1**

(12) **EUROPÄISCHE PATENTSCHRIFT**

(45) Veröffentlichungstag und Bekanntmachung des Hinweises auf die Patenterteilung:
**06.03.2024 Patentblatt 2024/10**

(21) Anmeldenummer: **17832504.9**

(22) Anmeldetag: **22.12.2017**

(51) Internationale Patentklassifikation (IPC):
**G01P 15/093** (2006.01)      **G01P 1/00** (2006.01)
**G01P 21/00** (2006.01)      **G01B 11/16** (2006.01)
**G01P 15/18** (2013.01)      **G01D 5/353** (2006.01)
**G01P 15/08** (2006.01)

(52) Gemeinsame Patentklassifikation (CPC):
**G01P 15/093; G01B 11/18; G01P 1/006;**
**G01P 15/18; G01P 21/00;** G01P 2015/0828

(86) Internationale Anmeldenummer:
**PCT/EP2017/084487**

(87) Internationale Veröffentlichungsnummer:
**WO 2018/115486 (28.06.2018 Gazette 2018/26)**

(54) **FASEROPTISCHER BESCHLEUNIGUNGSSENSOR MIT HEBELARM**

FIBER-OPTIC ACCELERATION SENSOR HAVING LEVER ARM

CAPTEUR D'ACCÉLÉRATION À FIBRE OPTIQUE AVEC BRAS DE LEVIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2016 DE 102016125612**

(43) Veröffentlichungstag der Anmeldung:
**30.10.2019 Patentblatt 2019/44**

(73) Patentinhaber: **VC VIII Polytech Holding ApS**
**6740 Bramming (DK)**

(72) Erfinder:
- **KIENITZ, Sascha**
  **81547 München (DE)**
- **SCHMID, Markus**
  **80636 München (DE)**
- **MAI, Manuel**
  **81379 München (DE)**

(74) Vertreter: **Zacco Denmark A/S**
**Arne Jacobsens Allé 15**
**2300 Copenhagen S (DK)**

(56) Entgegenhaltungen:
WO-A1-99/39214          WO-A1-2010/057247
CN-A- 101 285 847      CN-A- 102 128 952
DE-A1- 19 939 583      DE-A1-102013 101 432
US-A1- 2004 237 648

- **STORGAARD-LARSEN T ET AL: "OPTO-MECHANICAL ACCELEROMETER BASED ON STRAIN SENSING BY A BRAGG GRATING IN A PLANAR WAVEGUIDE", SENSORS AND ACTUATORS A: PHYSICAL, ELSEVIER BV, NL, Bd. A52, Nr. 1/03, 1. März 1996 (1996-03-01), Seiten 25-32, XP000599972, ISSN: 0924-4247, DOI: 10.1016/0924-4247(96)80121-X**

**Beschreibung**

TECHNISCHES GEBIET

Ausführungsformen der vorliegenden Anmeldung betreffen allgemein eine optische Messvorrichtung zur Erfassung von Messgrößen mittels in optischen Fasern eingebetteter Sensoren, und betrifft insbesondere eine Messvorrichtung und ein Verfahren zur Messung einer Beschleunigung mit faseroptischen Messsystemen. Im speziellen beziehen sich Ausführungsformen auf eine Vorrichtung zum Detektieren einer Beschleunigung, eine Vorrichtung zum Detektieren einer Beschleunigung in zumindest zwei Raumrichtungen und ein Verfahren zum Detektieren einer Beschleunigung.

STAND DER TECHNIK

In hochpräzisen Messsystemen gewinnen faseroptische Sensoren zunehmend an Bedeutung. Hierbei werden ein oder mehrere in Lichtwellenleiter eingebettete Sensoren, wie beispielsweise Faser-Bragg-Gitter, verwendet, um durch mechanische Größen hervorgerufene Dehnungen der optischen Faser zu erfassen, und um damit die Kräfte, Drehmomente, Belastungen, etc. detektieren zu können.

Die in Fasersensoren integrierten Sensorelemente werden mit optischer Strahlung in einem geeigneten Wellenlängenbereich bestrahlt, wobei in Abhängigkeit von der Auslegung des Sensorelements und der auf das Sensorelement einwirkenden mechanischen Größe ein Teil des eingestrahlten Lichts vom Sensor reflektiert und/oder transmittiert wird und einer Auswerte- und Analyseeinheit zugeführt werden kann. Durch die einwirkende Kraft wird der Lichtwellenleiter gedehnt, und eine Reflexions- bzw. Transmissionswellenlänge des Faser-Bragg-Gitters ändert sich. Diese Wellenlängenänderung kann in der Analyseeinheit untersucht und zur Detektion von mechanischen Einflüssen auf das Sensorelement herangezogen werden.

Die Intensität und/oder der Wellenlängenbereich der am Sensorelement reflektierten optischen Strahlung bzw. der durch das Sensorelement transmittierten optischen Strahlung weisen nun Merkmale auf, die durch die aufgebrachte mechanische Größe beeinflusst werden. Die in die optische Sensorfaser integrierten faseroptischen Sensorelemente sind u.a. empfindlich auf Dehnungen der Sensorfaser, wodurch das von dem von dem Sensorelement reflektierte oder das durch das Sensorelement transmittierte Wellenlängenspektrum beeinflusst wird.

Ferner ist die Erfassung von Beschleunigungen für eine Reihe von Anwendungen in der Mess- und Regelungstechnik von Bedeutung. Hierbei ist eine einfache und dennoch präzise Fertigung von entsprechenden optischen Messsystemen erstrebenswert. Typischerweise werden faseroptische Beschleunigungssensoren durch die mechanische Anbindung einer Lichtleitfaser an eine Masse erstellt. Dabei ist unter anderem auch zu beachten, dass für unterschiedliche Messaufgaben unterschiedliche Empfindlichkeiten bzw. Messbereiche zur Verfügung gestellt werden.

CN 101 285 847 A betrifft einen temperaturunempfindlichen Fasergitter-Beschleunigungssensor. US 2004/0237648 A1 betrifft eine optische Beschleunigungsmesseinrichtung mit einem Faser-Bragg-Gitter. WO 2010/057247 A1 betrifft eine Vorrichtung zum Erfassen von seismischen Beschleunigungen. CN 102 128 952 A beschreibt einen faseroptischen Beschleunigungssensor, der eine Masse, einen mit der Masse verbundenen Hebelarm und einen Rahmen aufweist. Die Erfassung der Beschleunigungen erfolgt durch faseroptische Sensoren mittels optischer Fasern. Außerdem weist der Sensor Mittel zur Temperaturkompensation auf.

Darüber hinaus ist zu beachten, dass eine Dehnungen der optischen Faser und damit des optischen Sensorelements in der Faser und/oder Veränderungen der Faser-Bragg-GitterStruktur nicht nur von der zu messenden mechanischen Größe, wie beispielsweise der Kraft, abhängen, sondern können auch durch unerwünschte Störgrößen, wie beispielsweise Temperaturschwankungen, beeinflusst werden. Es ist somit wünschenswert, Störgrößen, die sich auf die Messgenauigkeit bei der Erfassung der Sollgrößen auswirken, zu eliminieren oder zumindest zu reduzieren.

ZUSAMMENFASSUNG

Die vorliegende Erfindung stellt eine Vorrichtung zum Detektieren einer Beschleunigung, eine Vorrichtung zum Detektieren einer Beschleunigung in zumindest zwei Raumrichtungen und ein Verfahren zum Detektieren einer Beschleunigung bereit. Bevorzugte Ausführungen und besondere Aspekte von Ausführungsformen der Erfindung ergeben sich aus den Unteransprüchen.

Gemäß einer Ausführungsform ist eine Vorrichtung zum Detektieren einer Beschleunigung zur Verfügung gestellt. Die Vorrichtung beinhaltet einen Rahmen; eine Masse; eine mit der Masse verbundenen Hebelarm, wobei die Masse an einer ersten Hebelposition zur Verfügung gestellt ist; eine optische Faser mit einem faseroptischen Sensor; und ein Kompensationselement für Störgrößen, wobei das Kompensationselement für Störgrößen mit dem Hebelarm oder der Masse und wobei das Kompensationselement für Störgrößen mit dem Rahmen verbunden ist.

Gemäß einer weiteren Ausführungsform ist Eine Vorrichtung zum Detektieren einer Beschleunigung in zumindest zwei Raumrichtungen zur Verfügung gestellt. Die Vorrichtung beinhaltet zumindest zwei Vorrichtungen zum Detektieren einer Beschleunigung in einer Raumrichtung, wobei die jeweiligen Rahmen der zumindest zwei Vorrichtungen miteinander verbunden sind.

Gemäß einer weiteren Ausführungsform ist ein Verfahren zum Detektieren einer Beschleunigung zur Verfügung gestellt. Das Verfahren beinhaltet einstrahlen von elektromagnetischer Strahlung in eine Vorrichtung einer der Ausführungsformen der vorliegenden Offenbarung; erfassen eines optischen Signals, das durch die von der Vorrichtung beeinflusste elektromagnetische Strahlung zur Verfügung gestellt wird; und auswerten des optischen Signals.

KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:

FIG. 1          eine Sensorfaser, welche ein als ein Faser-Bragg-Gitter ausgebildetes integriertes Sensorelement zur Messung einer Faserdehnung enthält;

FIG. 2          eine schematische Ansicht einer Vorrichtung zur Messung einer Beschleunigung mit einem Hebelarm und einer Ausführungsform der Erfindung;

FIG. 3A         eine schematische Ansicht einer weiteren Vorrichtung zur Messung einer Beschleunigung mit einem Hebelarm und einer damit verbunden optischen Faser, sowie einer Halterung, zum Beispiel in Form eines Rahmens, gemäß einer Ausführungsform der Erfindung;

FIGS. 3B und 3C    weitere schematische Ansichten von weiteren Vorrichtungen zur Messung einer Beschleunigung mit einem Hebelarm und einer optischen Faser, sowie einer Halterung, zum Beispiel in Form eines Rahmens, gemäß einer Ausführungsform der Erfindung;

FIG. 4          eine schematische Ansicht einer weiteren Vorrichtung zur Messung einer Beschleunigung mit einem Hebelarm und einer damit verbunden optischen Faser gemäß einer Ausführungsform der Erfindung, wobei die Einstellung eines Messbereichs und/oder einer Empfindlichkeit gemäß Ausführungsformen der vorliegenden Erfindung beschrieben wird;

FIG. 5          eine schematische Ansicht einer weiteren Vorrichtung zur Messung einer Beschleunigung mit einem Hebelarm und einer damit verbunden optischen Faser, sowie einer Halterung, zum Beispiel in Form eines Rahmens, gemäß einer Ausführungsform der Erfindung;

FIGS. 6A und 6B    schematische Ansichten weiteren Vorrichtungen zur Messung einer Beschleunigung mit einem Hebelarm und einer damit verbunden optischen Faser, sowie einer Halterung, zum Beispiel in Form eines Rahmens, wobei ein Dämpfungselement, zum Beispiel zur Temperaturkompensation, verwendet wird, gemäß einer Ausführungsform der Erfindung;

FIG. 7          eine schematische Ansicht einer Vorrichtung zur Messung einer Beschleunigung in drei Raumrichtungen, mit jeweils einem Hebelarm und einer damit verbunden optischen Faser gemäß einer Ausführungsform der Erfindung;

FIG. 8          eine schematische Ansicht einer Messanordnung mit einer Vorrichtung zur Messung einer Beschleunigung mit einem Hebelarm und einer damit verbunden optischen Faser gemäß einer Ausführungsform der Erfindung; und

FIG. 9          ein Flussdiagramm zur Veranschaulichung eines Verfahrens zum Detektieren einer Beschleunigung gemäß Ausführungsformen der vorliegenden Erfindung.

In den Zeichnungen bezeichnen gleiche Bezugszeichen gleiche oder funktionsgleiche Komponenten oder Schritte.

DETAILLIERT BESCHREIBUNG

Im Folgenden wird detaillierter Bezug genommen auf verschiedene Ausführungsformen der Erfindung, wobei ein oder mehrere Beispiele in den Zeichnungen veranschaulicht sind.
Ausführungsformen der vorliegenden Erfindung, die hierin beschrieben sind, betreffen u.a. eine Vorrichtung und ein Verfahren zur Detektion einer Beschleunigung, mit einem faseroptischen Messsystem. In der Vorrichtung, zum Beispiel einem faseroptischen Messsystem, wird zum Beispiel zumindest ein Faser-Bragg-Gitter bereitgestellt, das eine Bragg-Wellenlänge aufweist. Das Faser-Bragg-Gitter wird mit Primärlicht bestrahlt und mit einer mechanischen Größe derart beaufschlagt, dass die Bragg-Wellenlänge des Faser-Bragg-Gitters durch die mechanische Größe verändert wird.

Nach einem Erfassen von durch das Primärlicht hervorgerufenem und durch die Bragg-Wellenlänge des Faser-Bragg-Gitters in Abhängigkeit von der mechanischen Größe modifiziertem Sekundärlicht wird das optische Signal ausgewertet. Die mechanische Größe ist typischerweise eine Dehnung einer optischen Faser, die an einem Hebelarm und einer weiteren Position derart befestigt ist, dass eine auf den Hebelarm ausgeübte Kraft eine Dehnung (positiv oder negativ) der optischen Faser herbeiführt. Die auf den Hebelarm ausgeübte Kraft erfolgt durch die Beschleunigung einer Masse, die ebenfalls am Hebelarm befestigt ist. Der Verwendung eines Hebelarms und das Zusammenwirkungen zwischen Hebelarm, optischer Faser, Masse und einer Halterung oder einem Gehäuse bzw. einem Rahmen erlauben es eine Empfindlichkeit des Sensors festzulegen, einen Messbereich des Sensors festzulegen, und/oder eine temperaturbedingtes Störsignal zu reduzieren oder zu unterdrücken.

Gemäß Ausführungsformen der vorliegenden Erfindung, besteht ein Zusammenhang zwischen Rahmen, Hebelarm, optischer Faser, und Masse. Dieser Zusammenhang kann insbesondere eine Beeinträchtigung der Messung durch Störgrößen, zum Beispiel Temperaturschwankungen, beeinflussen. Zur Kompensation der Störgrößen, zum Beispiel zur Temperaturkompensation, kann eine Entkopplung der Elemente vorteilhaft sein. Die Ausführungsform der vorliegenden Erfindung beinhaltet ein Kompensationselement zu Kompensation von Störgrößen, zum Beispiel zur Temperaturkompensation. Das Kompensationselement ist als eine Faserhalterung, die unabhängig von dem Hebelarm zur Verfügung gestellt ist, zur Verfügung gestellt. Zusätzlich oder alternativ kann ein weiteres Kompensationselement als Dämpfungselement zur Verfügung gestellt sein.

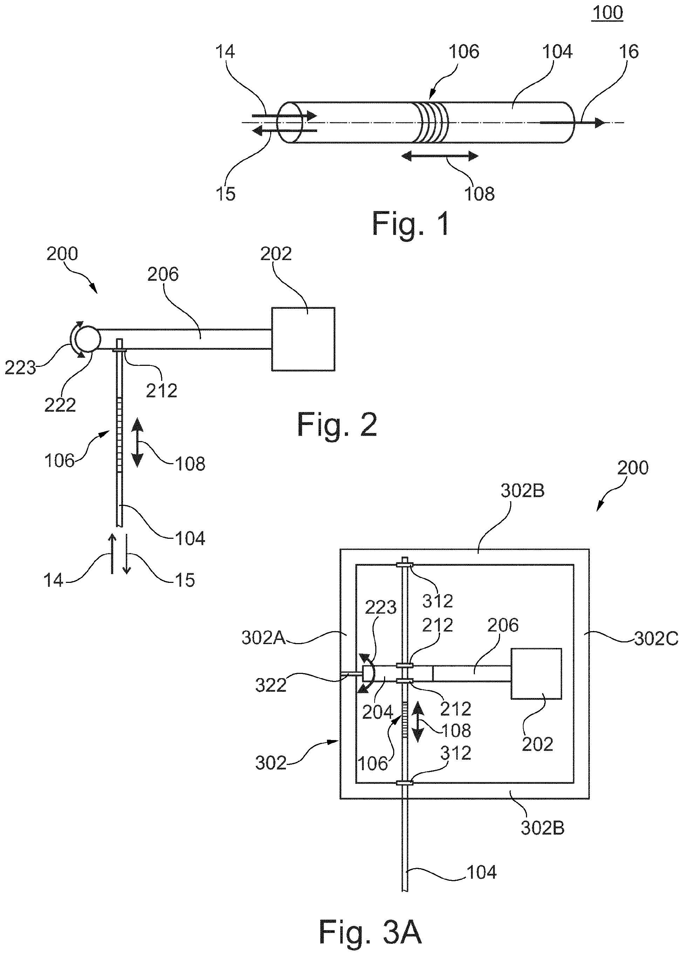

FIG. 1 veranschaulicht einen in einen Lichtwellenleiter integrierten Sensor bzw. eine Sensoreinheit 100, welche ein Faser-Bragg-Gitter 106 aufweist. Obwohl in FIG. 1 nur ein einziges Faser-Bragg-Gitter 106 gezeigt ist, ist zu verstehen, dass die vorliegende Erfindung nicht auf eine Datenerfassung aus einem einzelnen Faser-Bragg-Gitter 106 beschränkt ist, sondern dass längs einer Übertragungsfaser, einer Sensorfaser bzw. einer optischen Faser 104 eine Vielzahl von Faser-Bragg-Gittern 106 angeordnet sein können.

FIG. 1 zeigt somit nur einen Abschnitt eines optischen Wellenleiters, welcher als Sensorfaser oder optischer Faser 104 ausgebildet ist, wobei diese Sensorfaser empfindlich auf eine Faserdehnung (siehe Pfeil 108) ist. Es sei hier darauf hingewiesen, dass der Ausdruck "optisch" bzw. "Licht" auf einen Wellenlängenbereich im elektromagnetischen Spektrum hinweisen soll, welcher sich vom ultravioletten Spektralbereich über den sichtbaren Spektralbereich bis hin zu dem infraroten Spektralbereich erstrecken kann. Eine Mittenwellenlänge des Faser-Bragg-Gitters 106, d.h. eine so genannte Bragg-Wellenlänge $\lambda_B$, wird durch die folgende Gleichung erhalten:

$$\lambda_B = 2 \cdot n_k \cdot \Lambda.$$

Hierbei ist $n_k$ die effektive Brechzahl des Grundmodus des Kerns der optischen Faser 104 und A die räumliche Gitterperiode (Modulationsperiode) des Faser-Bragg-Gitters 106.

Eine spektrale Breite, die durch eine Halbwertsbreite der Reflexionsantwort gegeben ist, hängt von der Ausdehnung des Faser-Bragg-Gitters 106 längs der Sensorfaser ab. Die Lichtausbreitung innerhalb der Sensorfaser ist somit durch die Wirkung des Faser-Bragg-Gitters 106 beispielsweise abhängig von Kräften, Momenten und mechanischen Spannungen sowie Temperaturen, mit der die Sensorfaser, d.h. die optische Faser 104 und insbesondere das Faser-Bragg-Gitter 106 innerhalb der Sensorfaser beaufschlagt werden.

Wie in FIG. 1 gezeigt, tritt elektromagnetische Strahlung 14 oder Primärlicht von links in die optische Faser 104 ein, wobei ein Teil die elektromagnetische Strahlung 14 als ein transmittiertes Licht 16 mit einem im Vergleich zur elektromagnetischen Strahlung 14 veränderten Wellenlängenverlauf austritt. Ferner ist es möglich, reflektiertes Licht 15 am Eingangsende der Faser (d.h. an dem Ende, an welchem auch das elektromagnetische Strahlung 14 eingestrahlt wird) zu empfangen, wobei das reflektierte Licht 15 ebenfalls eine modifizierte Wellenlängenverteilung aufweist. Das optische Signal das zur Detektion und Auswertung verwendet wird kann gemäß den hier beschriebenen Ausführungsformen durch das reflektieret Licht, durch das transmittierte Licht, sowie eine Kombination der beiden zur Verfügung gestellt werden.

In einem Fall, in dem die elektromagnetische Strahlung 14 bzw. das Primärlicht in einem breiten Spektralbereich eingestrahlt wird, ergibt sich in dem transmittierten Licht 16 an der Stelle der Bragg-Wellenlänge ein Transmissionsminimum. In dem reflektierten Licht ergibt sich an dieser Stelle ein Reflexionsmaximum. Eine Erfassung und Auswertung der Intensitäten des Transmissionsminimums bzw. des Reflexionsmaximums, oder von Intensitäten in entsprechenden Wellenlängenbereichen erzeugt eine Signal, das im Hinblick auf die Längenänderung der optischen Faser 104 ausgewertet werden kann und somit auf Kräfte bzw. Beschleunigungen Aufschluss gibt.

FIG. 2 zeigt eine Vorrichtung 200 zum Detektieren einer Beschleunigung. Die Vorrichtung beinhaltet eine Masse 202, die an einem Hebelarm 206 befestigt ist. Der Hebelarm 206 hat einen Fixpunkt 222, so dass eine Bewegung des Hebelarms und der Masse, die durch Pfeil 223 dargestellt ist, ermöglicht wird. Weiterhin ist eine optische Faser 104 mit einem Faser-Bragg-Gitter 106 an dem Hebelarm 206 befestigt. Hierbei ist die Sensorfaser mit einem Befestigungselement 212 am Hebelarm 206 befestigt. Gemäß typischen Ausführungsformen kann das Befestigungselement eine Klebestelle oder eine Klemmvorrichtung sein. Die Masse 202 ist an einer ersten Hebelposition mit dem Hebelarm 206 verbunden und die optische Faser 104 ist an einer zweiten Hebelposition mit dem Hebelarm 206 verbunden. Eine Bewegung der Masse bzw. des Hebelarms, die durch Pfeil 223 dargestellt ist, führt zu einer Längenänderung der optischen Faser 104, die durch Pfeil 108 dargestellt ist, bzw. Kraftauswirkung auf die optische Faser 104. Hierbei erzeugt das Faser-Bragg-Gitter 106 einen von der Dehnung bzw. Längenänderung abhängigen veränderten Wellenlängenverlauf des optischen Signals wie zum Beispiel des reflektierten Lichts 15, dass durch Reflexion des Primärlichts bzw. der elektromagnetischen Strahlung 14 erzeugt wird.

Bei herkömmlichen Beschleunigungssensoren wird die Masse typischerweise durch einen Federmechanismus an der Auslegung in einer oder mehreren Raumrichtungen eingeschränkt. Im einfachsten Fall kann sich die Masse lediglich in eine Richtung bewegen. In diese Richtung wird eine Sensorfaser an der Masse befestigt, die sich bei einer Beschleunigung der Masse dehnt. Bei einer solchen Anordnung sind die maximale Dehnung und damit die Empfindlichkeit der Faser durch das Gewicht der Masse und die Steifigkeit der Faser gegeben. Hierbei kann, um die Empfindlichkeit eines solchen Sensors zu steigern, lediglich die Masse vergrößert werden. Für empfindliche Sensoren kann dies zu Massen von bis zu mehreren 100 g Gewicht führen. Ein weiterer Nachteil einer solchen Anordnung ist, dass hierbei die Resonanzfrequenz f des Faser-Masse-Systems eine Abhängigkeit f ~ Wurzel(k/m) hat, die folglich mit steigender Masse abnimmt. Hierbei ist k die Federsteifigkeit des Faser-Masse-Systems. Da die minimale Federsteifigkeit durch die Steifigkeit der Faser beschränkt ist, lässt sich somit nur ein eingeschränkter Bereich konfigurieren.

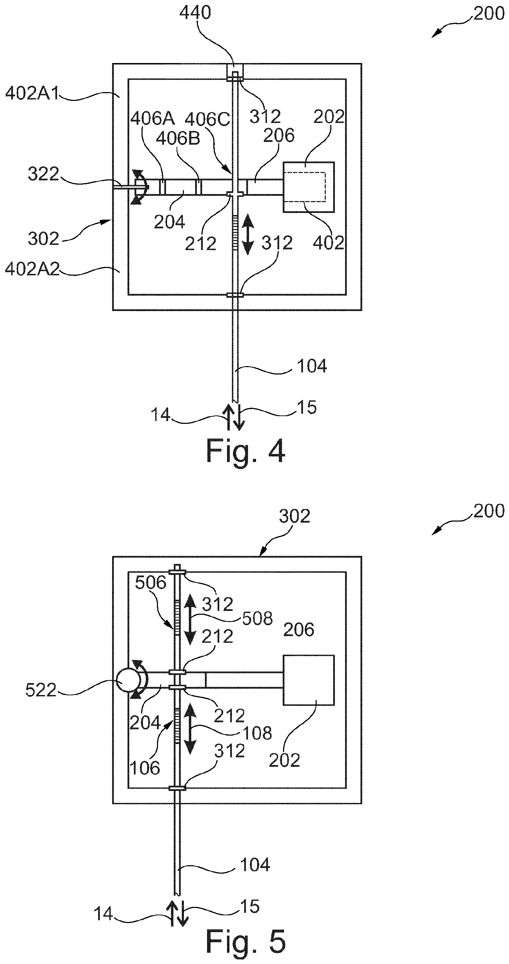

Durch die Verwendung eines Hebelarm kann diese Beschränkung des zu konfigurieren Bereichs aufgehoben bzw. verringert werden. Wie in FIG. 4 näher erläutert wird, aber auch bereits in FIG. 2 zu erkennen ist, kann durch eine Veränderung der Befestigungsposition der optischen Faser 104 entlang des Hebelarms 206, d.h. einer Veränderung der zweiten Hebelposition, an der die optische Faser 104 befestigt ist, eine Veränderung der Empfindlichkeit der Vorrichtung zum Detektieren einer Beschleunigung bereitgestellt werden. Die Empfindlichkeit kann somit verändert werden ohne hierzu die Masse 202 zu verändern und somit die Resonanzfrequenz zu beeinflussen.

Somit erlauben es Ausführungsformen der vorliegenden Erfindung den Zusammenhang zwischen Steifigkeit der Faser, Empfindlichkeit, sowie Resonanzfrequenz zu brechen. Durch den Einsatz eines mechanischen Hebels wird das Verhältnis aus Auslenkung der Faser und notwendiger Kraft beliebig konfigurierbar. Ferner erlaubt die Verwendung eines Hebelarms eine vergrößerte Kraft an der Faser auch mit einer kleinen Masse bzw. einer konstanten Masse.

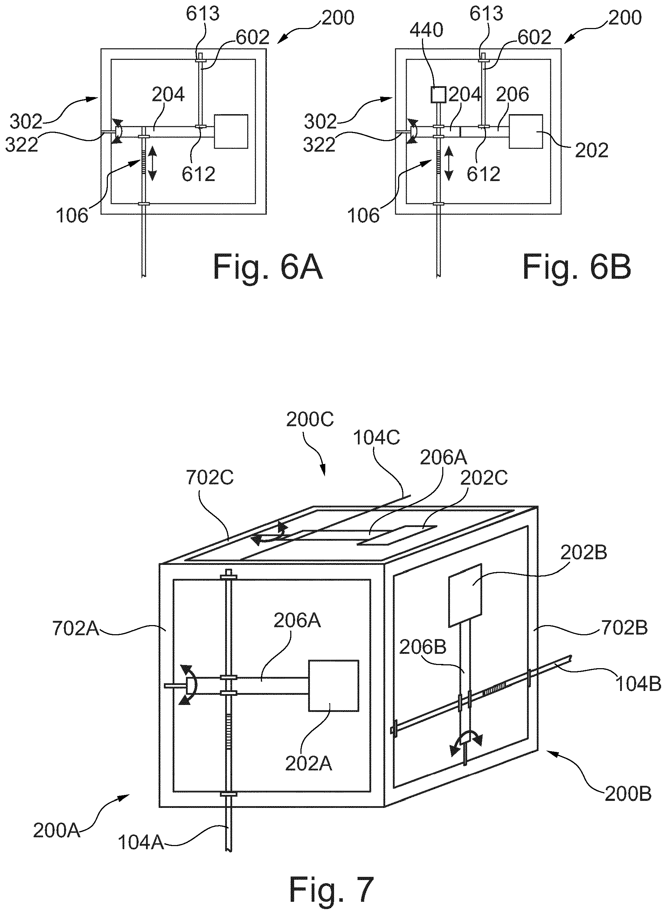

Die durch Pfeil 223 dargestellte Bewegung ist eine Bewegung des Hebelarm 206 bzw. der Masse 202 in der Papierebene von FIG. 2. Typischerweise kann der Fixpunkt 222 derart ausgestaltet sein, dass eine Bewegung lediglich in einer Ebene erfolgt. Gemäß weiteren Ausführungsformen kann eine Bewegung jedoch auch in zwei Ebenen oder sogar drei Ebenen erfolgen. Bei einer solchen Ausführungsform mit mehreren Bewegungsebenen können weitere optische Fasern 104 mit jeweils einem Faser-Bragg-Gitter 106 mit dem Hebelarm 206 verbunden sein, so dass eine Detektion einer Beschleunigung in mehreren Raumrichtungen erfolgen kann. Gemäß typischen Ausführungsformen, wird eine Vorrichtung zum mehrdimensionalen Detektieren einer Beschleunigung jedoch wie in Bezug auf FIG. 7 beschrieben ausgeführt.

FIG. 3A zeigt eine weitere Ausführungsform einer Vorrichtung 200 zum Detektieren einer Beschleunigung. Analog zu FIG. 2 ist eine Masse 202 an einer ersten Hebelarmposition mit dem Hebelarm 206 verbunden. Eine optische Faser 104 mit einem Faser-Bragg-Gitter 106 ist mit einer Faserhalterung verbunden, wobei die Faserhalterung 204 mit dem Hebelarm 206 verbunden ist, so dass eine Bewegung der Masse 202, des Hebelarms 206, und der Faserhalterung 204, die durch Pfeil 223 dargestellt ist, zu einer Längenänderung der optischen Faser führt, die durch Pfeil 108 dargestellt ist. Gemäß einigen Ausführungsformen, die mit anderen Ausführungsformen kombiniert werden können, kann ein Drehpunkt des Hebelarms 206 und somit der Faserhalterung 204 durch eine Feder 322 zur Verfügung gestellt werden. Die mechanische Feder kann z.B. ein Blech sein, d.h. ein dünnes Blech, das sich senkrecht zur Papierebene in FIG. 3A erstreckt. Hierdurch wird eine freie Drehung der Faserhalterung und des Balkens bzw. Hebelarms ermöglicht. Durch die Verwendung einer Feder 322 wie zum Beispiel einer Blattfeder, ist die freie Drehung auf die Drehrichtung in der Sensorebene beschränkt. Ein entsprechender Fixpunkt liegt typischerweise innerhalb der Feder 322 und wird durch die Eigenschaften der Feder bzw. der Befestigung der Feder vorgegeben. Die Feder 322 ist in einer Halterung 302 eingeklemmt bzw. an der Halterung 302 befestigt.

Gemäß typischen Ausführungsformen kann die Halterung als Rahmen ausgestaltet sein. Hierbei kann der Rahmen eine erste Stirnfläche 302A aufweisen, an der die Feder 322 befestigt ist bzw. in die die Feder 322 eingeklemmt ist. Im Falle des Einklemmens der Feder kann die Stirnfläche 302A zweiteilig ausgestaltet sein. Ferner kann der Rahmen die an die erste Stirnfläche 302A angrenzende Stirnflächen 302B aufweisen. Eine weitere Stirnfläche 302C kann dem Rahmen eine ausreichende Stabilität geben, ist für Ausführungsformen der vorliegenden Erfindung jedoch nicht notwendigerweise erforderlich. Dies ist insbesondere der Fall, wenn die Stirnflächen 302A und 302B eine ausreichende Steifigkeit aufweisen.

Die optische Faser 104 ist mit der Halterung, zum Beispiel den Stirnfläche 302B mit Befestigungselementen 312 verbunden. Die Befestigungselemente 312 können durch eine Klebestelle oder eine Klemmvorrichtung zur Verfügung gestellt werden. Weiterhin ist die optische Faser 104 mit dem Hebelarm 206 durch zumindest ein Befestigungselement 212 verbunden, wobei in FIG. 3A zwei Befestigungselemente 212, z.B. zwei Klebestellen, dargestellt sind. Gemäß typischen Ausführungsformen, die mit anderen hier beschriebenen Ausführungsformen kombiniert werden können, wird die Faser vorgespannt bevor sie mit den Befestigungselementen 212 bzw. 312 an der Halterung 302 bzw. dem Hebelarm 206 verbunden wird. Hierbei wird die Faser zwischen der unteren Stirnseite 302B in FIG. 3A und dem Hebelarm 206 vorgespannt sowie zwischen der oberen Stirnseite 302B und dem Hebelarm 206 vorgespannt. Durch die Vorspannung erfolgt eine Stabilisierung der Lage des Hebelarm 206 bzw. der Masse 202. Ferner kann eine beliebige Dehnung, d.h. eine positive Dehnung (Streckung) und eine negative Dehnung (Stauchung) verwendet werden, ohne Gefahr zu laufen die optische Faser 104 zu knicken.

Gemäß typischen Ausführungsformen, die mit anderen Ausführungsformen kombiniert werden können, enthalten die Vorrichtungen zur Detektion einer Beschleunigung ein mechanischen Feder, welche die freie Drehung eines Hebelarms oder Balkens um einen festen Punkt ermöglicht, einen Hebelarm oder Balken, einer Masse, sowie einem Rahmen und Faser mit Faser-Bragg-Gitter (FBG). Ferner können eine Faserhalterung und/oder ein Dämpfungselement zur Temperaturkompensation oder zur Kompensation anderer Störgrößen zur Verfügung gestellt sein. Eine Feder kann als Fixpunkt für den Balken bzw. den Hebelarm dienen.

Durch zum Beispiel den Einsatz eines dünnen Bleches als Federelement wird die Bewegung des Balkens auf die Drehrichtung in der Sensorebene beschränkt. Eine Bewegung senkrecht hierzu wird durch die wesentlich höhere Steifigkeit des Bleches eingeschränkt. Dies ermöglicht auch die Messung bei Querlage. Die optische Faser, d.h. die Messfaser, wird im Rahmen vorgespannt und mit dem Balken verbunden z.B. verklebt. Bei Beschleunigung der Masse wird über den Hebel, bzw. den Hebel und die Faserhalterung, eine Kraft in die Faser eingeleitet, die um den Hebelfaktor, bzw. den Hebelfaktor des Hebels und der Faserhalterung, verstärkt wird. Dies führt in der Messfaser zu einer Dehnung, die proportional zur Beschleunigung ist. Durch die Einstellung der Hebellänge kann die Empfindlichkeit sowie die Resonanzfrequenz eingestellt werden. Durch Ausführungsformen der Erfindung lässt sich ein zuverlässiger Beschleunigungssensor implementieren, der eine einfache und dennoch präzise Fertigung, und auch eine präzise manuelle Fertigung ermöglicht.

Typische Ausführungsformen der vorliegenden Erfindung erlauben eine darüber hinaus vorteilhafte Ausgestaltung. Durch Änderungen der Umgebungstemperatur ändert sich die Ausdehnung der Halterung 302 bzw. des die Halterung formenden Rahmens, wie er beispielhaft in FIG. 3A dargestellt ist. Hierdurch kann es zu einer Längenänderung in der optischen Faser 104 kommen, die nicht durch eine Beschleunigung der Masse 202 herbeigeführt ist. Daher wird gemäß typischen Ausführungsformen, die mit den anderen hier beschriebenen Ausführungsformen kombiniert werden können, dass Material des Rahmens bzw. das Material der Faserhalterung wie folgt gewählt.

Die Halterung 302 bzw. der Rahmen mit den Stirnflächen 302A und 302C hat in Richtung der Achse der optischen Faser 104 eine vorbestimmte Abmessung bei einer vorgegebenen Temperatur. Ferner hat der die Faserhalterung 204 in Richtung der Achse der optischen Faser 104 eine vorbestimmte Abmessung. Durch die unterschiedlichen Abmessungen in dieser Richtung führt eine Temperaturänderung zu einer unterschiedlichen thermischen Ausdehnung bei identischen thermischen Ausdehnungskoeffizienten. Daher wird gemäß typischen Ausführungsformen, die mit anderen Ausführungsformen kombiniert werden können, das Material der Halterung 302 derart gewählt, dass es einen geringeren thermischen Ausdehnungskoeffizienten hat im Vergleich zum Material der Faserhalterung z

Zum Beispiel kann die Halterung 302 mit einem thermischen Ausdehnungskoeffizienten von 5 ppm/K bis 27 ppm/K, z.B. 23 ppm/K zur Verfügung gestellt werden. Die Faserhalterung 204 kann mit einem thermischen Ausdehnungskoeffizienten von zumindest 30 ppm/K, zum Beispiel 30 ppm/K bis 100 ppm/K, zum Beispiel 50 ppm/K, zur Verfügung gestellt werden. Zum Beispiel kann die Faserhalterung aus Polyetherimid (PEI) zur Verfügung gestellt sein. Die Masse und/oder gegebenenfalls der Hebelarm können als seismische Masse aus einem anderen Material (im Vergleich zur Faserhalterung), zum Beispiel aus Eisen, Stahl, oder anderen Materialien zur Verfügung gestellt werden, wobei die Dichte gemäß manchen Ausführungsformen größer als 5 g/cm$^3$ ist.

Weiterhin ist es in diesem Rahmen vorteilhaft, wenn die Abmessung der Faserhalterung in Richtung der Längsachse der optischen Faser 104 zumindest 20 % bzw. zumindest 40 % der Abmessung der Halterung 302 in der entsprechenden Richtung aufweist. Bei der Wahl der Abmessungen der Faserhalterung in Richtung der Längsachse der Faser und der Wahl der thermischen Ausdehnungskoeffizienten ist ferner zu beachten, ob die Befestigungselemente 312 bzw. 212, mit denen die optische Faser 104 verbunden sind, an der jeweiligen Innenseite oder der jeweiligen Außenseite der Halterung bzw. an der Ober- bzw. Unterseite der Faserhalterung angebracht sind. Durch entsprechende Anpassung kann hierbei die Wahl der Materialien und Abmessungen entsprechend zur Verfügung gestellt werden.

Gemäß weiteren Ausführungsformen, die mit anderen her beschriebenen Ausführungsformen kombiniert werden können, ist die Dicke der Faserhalterung zumindest 6 mm, zum Beispiel ungefähr 10 mm. Die Dicke des Balkens ist die Ausdehnung, die im Wesentlichen parallel zur Richtung der Längsachse der optischen Faser 104. Die Kombination aus einem Ausdehnungskoeffizienten von 30 ppm/K und größer und einer hier beschriebenen Abmessung (Dicke) des Hebelarms hat den Vorteil einer verbesserten Temperaturkompensation. Weiterhin ist es gemäß manchen Ausführungsformen der vorliegenden Erfindung möglich, den Hebelarm und die Faserhalterung unabhängig voneinander zur Verfügung zu stellen. Die Faserhalterung kann auf die thermische Ausdehnung der Halterung 302 eingestellt werden. Der Hebelarm mit einer Masse oder der Hebelarm mit einer zusätzlichen Masse kann unabhängig von der Wahl der Faserhalterung für eine Empfindlichkeit des Sensors gewählt werden.

Durch die oben beschriebene Wahl von Materialien mit entsprechenden thermischen Ausdehnungskoeffizienten kann der Einfluss von Temperaturänderungen signifikant reduziert oder eliminiert werden. Zum Beispiel kann eine Dehnung der Faser auf wenige pm/Kelvin bzw. unter 1% der Gravitationskraft reduziert werden.

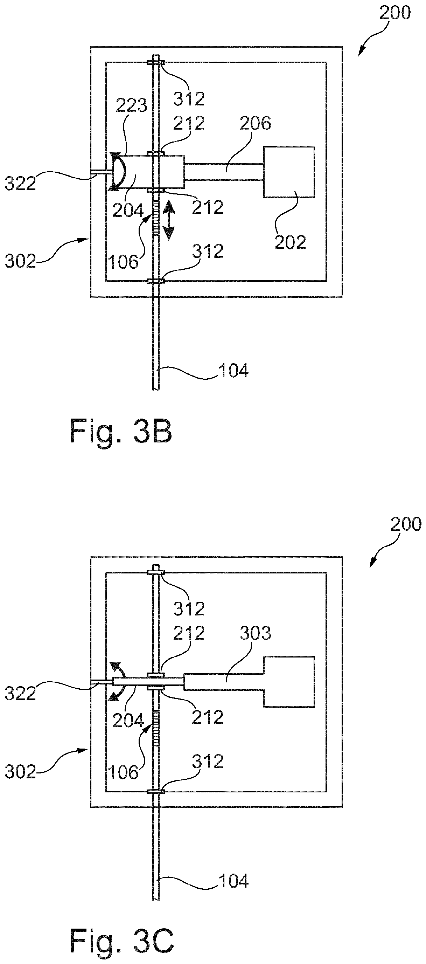

FIG. 3B zeigt eine weitere Ausführungsform einer Vorrichtung 200 zur Detektion einer Beschleunigung. Die optische Faser 104 ist in einem Rahmen 302 eingespannt. Zur Messung der Auslenkung der Masse 202 ist ein Faser-Bragg Gitter 106 zur Verfügung gestellt. Ferner ist die optische Faser 104 mit der Faserhalterung 204 verbunden. Die Faserhalterung 204 ist mit dem Rahmen 302 verbunden. Weiterhin ist die Faserhalterung 204 mit dem Hebelarm 206 verbunden. Der Hebelarm 206 ist mit der Masse 202, zum Beispiel einer seismischen Masse, zu Messung einer Beschleunigung verbunden. Gemäß einigen hier beschriebenen Ausführungsformen, die mit anderen Ausführungsformen kombiniert werden können, bilden die Faserhalterung 204, der Hebelarm 206, und die Masse 202 einen Hebel bzw. eine beweglich Anordnung, wobei die Beschleunigung der Masse 202, bzw. die Beschleunigung der Masse 202 und des Hebelarms 206, zu einer Dehnung bzw. Stauchung der Faser 104 führen. In FIG. 3B ist die Faserhalterung 204 dicker als der Hebelarm 206. Gemäß weiteren Ausführungsformen, kann die Faserhalterung auch dünner als der Hebelarm 206 sein (siehe zum Beispiel FIG. 3C). Durch die Trennung von Faserhalterung und Hebelarm, kann die Faserhalterung als Kompensationselement unabhängig vom Hebelarm ausgestaltet sein.

Die Trennung von Faserhalterung 204 und Hebelarm 206 erlaubt es, die Parameter für die Kompensation von Störgrößen, zum Beispiel für die Temperaturkompensation, und die Parameter für die Sensorempfindlichkeit, zum Beispiel die Länge des Hebelarm, unabhängig voneinander einzustellen. Dies erlaubt eine verbesserte Temperaturkompensation. Eine verbesserte Temperaturkompensation führt darüber hinaus zu einer leichteren Einstellung des Arbeitspunkts bei der Herstellung der Vorrichtung. Zum Beispiel führt die verbesserte Temperaturkompensation zu einer geringeren Verschiebung der Bragg-Wellenlänge beim Aufheizen des Sensors zur Aushärtung von Klebstoffen.

Darüber hinaus kann gemäß einigen der hier beschriebenen Ausführungsformen, eine Temperaturempfindlichkeit durch die Höhe (Abmessung in Richtung der Sensorfaser) der Faserhalterung zur Verfügung gestellt werden. Dies kann im Wesentlichen unabhängig von dem Hebelarm geschehen, sodass eine Wechselwirkung zwischen Parametern der Kompensation von Störgrößen und Parametern der Empfindlichkeit des Sensors reduziert ist. Diesbezüglich kann eine Sensorhalterung derart ausgestaltet sein, dass die Sensorhalterung einen Hebel mit dem Verhältnis von ungefähr 1:1 bildet, sodass die Ausgestaltung der Faserhalterung keinen Einfluss auf das Hebelverhältnis hat.

FIG. 3C zeigt eine weitere Ausführungsform, die mit weiteren Ausführungsformen kombiniert werden kann. Im Gegensatz zu Figur 3 B beinhaltet die Vorrichtung 200 zur Detektion einer Beschleunigung eine Faserhalterung 204 und einen mit der Masse 303 integral ausgebildeten Hebelarm. Die Kombination von Masse und Hebelarm kann zu einer leichteren Herstellung der Vorrichtung 200 führen. Eine Trennung von Sensorhalterung und Hebelarm kann insbesondere dadurch definiert werden, dass die Sensorhalterung an sich einen Hebel mit einem Verhältnis zwischen 0,8:1 und 1:0,8 bildet, also ungefähr einen Hebel mit dem Verhältnis 1:1 bildet.

Desweiteren zeigt FIG. 3C eine optionale Ausgestaltung der hier beschriebenen Ausführungsformen, wobei die optische Faser lediglich in einer Richtung zwischen dem Rahmen 302 und der beweglichen Baugruppe bzw. der beweglichen Anordnung, also zum Beispiel der Faserhalterung 202 und dem mit der Masse 303 integralausgebildeten Hebelarm zur Verfügung gestellt ist. Dies kann insbesondere in Kombination mit einem Dämpfungselement vorteilhaft sein, wie es in Bezug auf die FIGS. 6A und 6B näher beschrieben wird. Hierdurch kann die Anzahl der Kontaktpunkte, mit der die Masse direkt oder indirekt mit dem Rahmen 302 verbunden ist, reduziert werden. Hierdurch können Spannungen reduziert werden.

FIG. 4 zeigt eine weitere Vorrichtung 200 zur Detektion einer Beschleunigung. FIG. 4 zeigt eine Masse 202, die an einem Hebelarm 206 befestigt ist. Der in FIG. 4 dargestellte Hebelarm 206 ist mit einer Faserhalterung 204 verbunden, die eine Mehrzahl von Öffnungen 406A, 406B und 406C, durch die die optische Faser 104 geführt ist, aufweist. Im Falle einer Faserhalterung mit mehreren Öffnungen, kann die Faserhalterung ebenfalls einen Teil eines Hebelarms zur Verfügung stellen. Die optische Faser wird durch ein Befestigungselement 112, wie zum Beispiel eine Klebeverbindung, mit der Faserhalterung 204 verbunden, nachdem sie durch die Öffnung im Hebelarm geführt wurde. Weiterhin ist die optische Faser 104 mit einem Befestigungselement 312, wie zum Beispiel einer Klebeverbindung an der Halterung 302 befestigt.

FIG. 4 zeigt weiterhin einen Terminator 440, der am Ende der optischen Faser 104 zur Verfügung gestellt ist. Der Terminator 440 führt zu einer Dämpfung der Reflexion am Faserende der optischen Faser. Hierdurch kann eine Reflexion am Faserende, die das optische Signal negativ beeinflusst, reduziert werden. Neben der Reflexion des Primärlichts bzw. der elektromagnetischen Strahlung 14 am Faser-Bragg-Gitter der optischen Faser 104, die zu einer Spektrallinien Veränderung des optischen Signals wie zum Beispiel des reflektierten Lichts 15 führt, kann auch eine Reflexion am Faserende dem Messsignal bzw. optischen Signal überlagert sein. Durch einen Terminator 440 kann eine solche Überlagerung mit dem Reflexionssignal, die ein Störsignal darstellt, verringert bzw. verhindert werden. Ein Terminator kann auch in anderen hier beschriebenen Ausführungsformen verwendet werden.

FIG. 4 dient ferner zur Illustration von Ausführungsformen zur Herstellung von Vorrichtungen 200 zur Detektion einer Beschleunigung bzw. zur Festlegung der Empfindlichkeit und des Messbereich des Beschleunigungssensors. Gemäß typischen Ausführungsformen, die mit anderen Ausführungsformen kombiniert werden können, kann die Stirnseite des Rahmens, der die Halterung 302 ausbildet, zweiteilig ausgebildet sein. Die Feder 322 wird zwischen einen ersten Teil 402A1 und einen zweiten Teil 402A2 der Stirnseite geklemmt. Durch Wahl der Dicke der Feder 322 bzw. durch Unterfütterung der Feder 322 mit zusätzlichen Blechen zwischen den jeweiligen Teilen der Stirnflächen und der Feder 322 kann die Vorspannung der optischen Faser 104 auch nach Verklebung durch die Befestigungselemente 312 eingestellt werden. Hierdurch kann auf einfache Weise die Vorspannung der optischen Faser 104 reguliert bzw. verändert werden.

Weiterhin stehen zur Wahl der Empfindlichkeit bzw. des Messbereich zumindest zwei Optionen zur Verfügung. Zum einen kann anstelle der Masse 202 eine kleinere Masse 402 verwendet werden. Zum zweiten kann die optische Faser 104 durch eine beliebige Öffnung der Öffnungen 406A, 406B bzw. 406C geführt werden. Hierdurch ändert sich die die Befestigungsposition relativ zum Hebelarm 206, das heißt eine zweite Hebelarmposition der Faser. Bei einer konstanten ersten Hebelarmposition, an der die Masse an dem Hebelarm 206 befestigt ist (und einem konstanten Fixpunkt des Hebelarms), kann durch die Wahl der zweiten Hebelarmposition die Hebelwirkung für die Kraft, die auf die optische Faser wird, eingestellt werden.

Bei einer typischen Ausführungsform der Herstellung oder Anpassung einer Vorrichtung zum Detektieren einer Beschleunigung gemäß hier beschriebenen Ausführungsformen, wird im Rahmen einer Bereichsfestlegung bzw. Empfindlichkeitsfestlegung zunächst die Masse verändert. Hierzu kann insbesondere eine 3-teilige Ausgestaltung der Anordnung von Faserhalterung, Hebelarm und Masse günstig sein. Falls eine entsprechende Änderung nicht ausreicht bzw. zu einer zu kleinen bzw. zu großen Masse führt, kann zusätzlich eine Änderung der zweiten Hebelarmposition durchgeführt werden. Dies kann zum Beispiel durch die Wahl der entsprechenden Öffnung der Faserhalterung 204 vorgenommen werden. Gemäß alternativen Ausführungsformen kann anstelle einer Mehrzahl von Öffnungen auch eine längliche Öffnung in der Faserhalterung verwendet werden, so dass eine kontinuierliche Verschiebung der zweiten Hebelarmposition ermöglicht wird.

FIG. 5 zeigt eine weitere Vorrichtung 200 zum Detektieren einer Beschleunigung. Im Vergleich zu den oben beschriebenen Ausführungsformen, die in Bezug auf die FIGS. 1-4 beschrieben sind, stellt FIG. 5 zwei weitere Aspekte, Merkmale, bzw. Details dar, die unabhängig voneinander oder in Kombination mit den bisherigen Ausführungsformen kombiniert werden können. Zur Vereinfachung werden die zuvor bereits beschriebenen Aspekte, Merkmale und Details von anderen Ausführungsformen nicht wiederholt.

FIG. 5 zeigt als erste Modifikation im Gegensatz zu der Feder 322, die zum Beispiel als dünnes Federblech ausgestaltet sein kann, ein Drehgelenkt oder eine Drehachse 522 an der der Hebelarm 206 befestigt ist. Die Drehachse 522 bildet den Fixpunkt für die Bewegung der Faserhalterung 204, des Hebelarms 206, und der Masse 202 in der Sensorebene, d.h. der Papierebene in FIG. 5. Hierbei kann die Verwendung eines Drehgelenks oder einer Drehachse zu einer erhöhten Steifigkeit in einer von der Sensorebene abweichenden Ebene führen. Dies führt zu einer verbesserten Messgenauigkeit.

Als zweite Modifikation, die zusätzlich oder alternativ implementiert werden kann, ist in der optischen Faser 104 neben dem ersten Faser-Bragg-Gitter 106 ein zweites Faser-Bragg-Gitter 506 zur Verfügung gestellt. Bei einer Bewegung der Masse 202 bzw. des Hebelarms 206 und somit der Faserhalterung führt eine positive Dehnung im Bereich des Faser-Bragg-Gitters 106, wie sie zum Beispiel durch Pfeil 108 dargestellt ist, im Gegenzug zu einer negativen Dehnung im Faser-Bragg-Gitter 506, wie sie zum Beispiel durch Pfeil 508 dargestellt ist. Im umgekehrten Fall führt eine negative Dehnung im Fase Bragg Gitter 106 zu einer positiven Dehnung im Faser-Bragg-Gitter 506. Eine elektromagnetische Strahlung 14, z.B. ein Primärlicht, wird in einer wie in FIG. 5 dargestellten Ausführungsform sowohl am Faser-Bragg-Gitter 106 modifiziert als auch am Faser-Bragg-Gitter 506 modifiziert. Das hieraus resultierende optische Signal wie zum Beispiel des reflektierten Lichts 15 oder auch transmittierten Lichts, das das optische Signal bildet, wird hierdurch mit einem höheren Informationsgehalt zur Verfügung gestellt. Dies ermöglicht eine Messung in einem Wellenlängenbereich des ersten Faser-Bragg-Gitters und des zweiten Faser-Bragg-Gitters. Hierdurch kann die Messgenauigkeit auf einfache Weise erhöht werden.

FIGS. 6A und 6B zeigen weitere Vorrichtungen 200 zum Detektieren einer Beschleunigung. Die Masse 202 ist über den Hebelarm bzw. eine Faserhalterung an einer Feder 322 befestigt, die einen festen Drehpunkt in einer Sensorebene ausbildet. Die optische Faser 104 mit dem Faser-Bragg-Gitter 106 führt durch die Befestigung der optischen Faser 104 am Hebelarm bzw. einer Faserhalterung zu einer Dehnung der Faser im Falle einer Bewegung des Hebelarms bzw. der Masse. Wie bereits in FIG. 4 dargestellt, ist in FIG. 6B ebenfalls ein Terminator 440 am Faserende der optischen Faser 104 zur Verfügung gestellt.

FIGS. 6A und 6B zeigen weiterhin ein Dämpfungselement 602. Das Dämpfungselement 602 kann einem der optischen Faser bzw. des Faser-Bragg Gitters gegenüberliegenden Seite der Faserhalterung bzw. des Hebelarm angeordnet sein. Nach einer Beschleunigung der Masse 202 führt die Anregung durch diese Beschleunigung bei anschließender konstanter Geschwindigkeit zu einer Schwingung mit der Eigenfrequenz des Systems. Typischerweise klingt diese Schwingung innerhalb kurzer Zeit ab. Um die Dämpfung zu verstärken bzw. das Abklingen zu beschleunigen kann ein Dämpfungselement eingefügt werden.

Gemäß typischen Ausführungsformen, die mit anderen Ausführungsformen kombiniert werden können, kann das Dämpfungselement durch ein Element, zum Beispiel ein Silikonstab, zur Verfügung gestellt werden. Das Dämpfungselement kann darüber hinaus zur Temperaturkompensation eingesetzt werden, wenn es in Form eines Stabes zwischen dem Hebelarm bzw. der Faserhalterung und dem Rahmen 302 zur Verfügung gestellt ist. Das Dämpfungselement kann mit Vorspannung zwischen dem Rahmen und der beweglichen Anordnung der Vorrichtung 200 zur Verfügung gestellt sein.

In FIG. 6A ist ein Dämpfungselement 602 zwischen einem Hebelarm 204 und einer daran befestigten optischen Faser 104 zur Verfügung gestellt. Die Masse 202 ist an dem Hebelarm 204 befestigt. Der Hebelarm 204 ist über eine Feder 322 oder ein anderes Element, das eine Rotation der Masse 202 erlaubt, mit dem Rahmen 302 verbunden. Durch ein Dämpfungselement 602, zum Beispiel in Form eines Stabes, kann eine Einstellung des Arbeitspunktes bei der Produktion gewährleistet werden. Hierzu kann eine gezielte Vorspannung auf das Dämpfungselement bzw. eine Vorspannung auf die Faser zur Verfügung gestellt werden. Die vor Spannungen der Faser und/oder des Dämpfungselements können eingestellt werden. Vorzugsweise kann die Vorspannung des Dämpfungsgliedes eingestellt werden. Durch die Wahl des Materials des Stabes, zum Beispiel Silikon oder Gummi, kann die Temperaturempfindlichkeit des Sensors auf wenige pm/K reduziert werden. Das Dämpfungselement 602 in Form eines Stabes kann als Temperaturkompensationselement agieren.

FIG 6B illustriert weitere Ausführungsformen, bei denen das Dämpfungselement 602, zum Beispiel ein Stab, zwischen dem Hebelarm 206 und dem Rahmen 302 zur Verfügung gestellt ist. Alternativ kann das Dämpfungselement 602 zwischen der Faserhalterung 204 und dem Rahmen 302 zur Verfügung gestellt sein. In Figur 6 B ist die bewegliche Anordnung der Vorrichtung 200 durch eine Faserhalterung 204, ein Hebelarm 206 und die Masse 202 zur Verfügung gestellt. Diese sind mit einer Feder oder einem anderen Element zur Bestimmung einer Drehachse an dem Rahmen 302 verbunden. Weiterhin können Ausführungsformen gemäß den FIGS. 6A und 6B einen Terminator 440 aufweisen.

Ausführungsformen der vorliegenden Erfindung erlauben es eine bewegliche Anordnung aus Hebelarm 204 und Masse 202 bzw. eine bewegliche Anordnung beinhalten und eine Faserhalterung 204, einen Hebelarm 206, und eine Masse 202 an lediglich 3 Positionen mit dem Rahmen 302 zu verbinden. Diese Befestigung reduziert Spannungen, die auf die bewegliche Anordnung bei Temperaturschwankungen oder Bewegungen wirken. Die Reduktion der Spannungen durch die Limitierung der Befestigungspunkte mit dem Rahmen erhöht die Lebensdauer der Vorrichtung 200 zur Messung einer Beschleunigung. Gemäß hier beschriebene Ausführungsformen können die drei Punkte, mit denen die bewegliche Anordnung mit dem Rahmen 302 verbunden sind, durch eine Feder oder eine andere Drehachse, durch eine Verbindung mit der optischen Faser, und durch das Dämpfungselement in Form eines Stabes zur Verfügung gestellt sein.

FIG. 7 zeigt eine weitere Vorrichtung zum Detektieren einer Beschleunigung, wobei insbesondere eine Beschleunigung in mehreren Raumrichtungen detektiert werden kann. FIG. 7 zeigt eine Vorrichtung zur Detektion einer Beschleunigung in allen drei Raumrichtungen. Die Vorrichtung in FIG. 7 zeigt einen ersten Beschleunigungssensor 200A, einen zweiten Beschleunigungssensor 200B und einen dritten Beschleunigungssensor 200C, wobei jeder der Beschleunigungssensoren gemäß einer der hier beschriebenen Ausführungsformen zur Detektion einer Beschleunigung ausgebildet ist. Jede der Beschleunigungssensoren beinhaltet eine optische Faser 104A, 104B bzw. 104C mit einem entsprechenden Faser-Bragg-Gitter, eine Masse 202A, 202B, bzw. 202C, einen Hebelarm 206A, 206B, bzw. 206C, gegebenenfalls eine Faserhalterung (in FIG. 7 nicht dargestellt), sowie einen Rahmen 702A, 702B, 702C. Durch die Ausführung der Halterung 302 als Rahmen, wie sie in den FIGS. 3A-6B dargestellt sind, kann eine Kombination von mindestens zwei Beschleunigungssensoren oder wie in FIG. 7 dargestellt drei Beschleunigungssensoren besonders einfach zur Verfügung gestellt werden. Daher können die zuvor beschriebenen Beschleunigungssensoren besonders einfach zu einem mehrdimensionalen Sensor zusammengefügt werden.

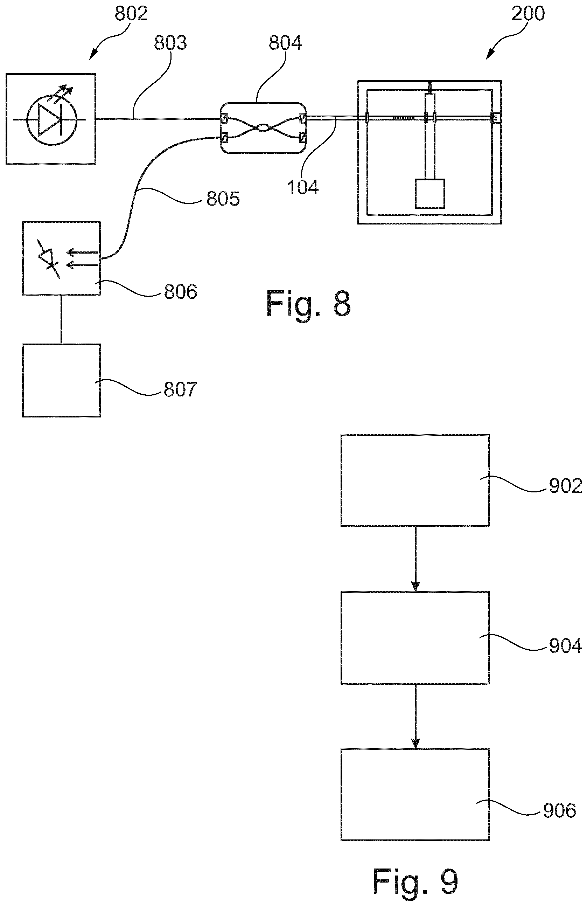

FIG. 8 zeigt ein typisches Messsystem zur Detektion einer Beschleunigung mit einer Vorrichtung zur Detektion einer Beschleunigung gemäß den hierin beschriebenen Ausführungsformen. Das System enthält einen oder mehrere Vorrichtungen 200. Das System weist eine Quelle 802 für elektromagnetische Strahlung, zum Beispiel eine Primärlichtquelle, auf. Die Quelle dient zur Bereitstellung von optischer Strahlung mit welcher mindestens ein optisches Sensorelement einer Vorrichtung 200 bestrahlt werden kann. Zu diesem Zweck ist eine optische Übertragungsfaser 803 zwischen der Primärlichtquelle 802 und einem ersten Faserkoppler 804 bereitgestellt. Der Faserkoppler koppelt das Primärlicht in die optische Faser 104. Die Quelle 802 kann zum Beispiel eine Breitbandlichtquelle, einen Laser, eine LED (light emitting diode), eine SLD (Superluminizenzdiode), eine ASE-Lichtquelle (Amplified Spontaneous Emission-Lichtquelle) oder ein SOA (Semiconductor Optical Amplifier) sein. Es können für hier beschriebene Ausführungsformen auch mehrere Quellen gleichen oder unterschiedlichen Typs (s.o.) verwendet werden.

Das optische Sensorelement, typischerweise ein Faser-Bragg-Gitter, ist in eine Sensorfaser 104 integriert. Das von den optischen Sensorelementen zurückgeworfene Licht wird wiederum über den Faserkoppler 804 geleitet, welcher das Licht über die Übertragungsfaser 805 auf einem Detektor 806 leitet. Insbesondere bei der Verwendung von mehreren FBGs, wie zum Beispiel in FIG. 5, dargestellt, kein zusätzliche eine optische Filtereinrichtung (nicht dargestellt) für die Filterung des optischen Signales bzw. Sekundärlichts verwendet werden. Eine optische Filtereinrichtung kann einen optischen Filter umfassen, der gewählt ist aus der Gruppe, welche besteht aus einem Dünnschichtfilter, einem Faser-Bragg-Gitter, einem LPG, einem Arrayed-Waveguide-Grating (AWG), einem Echelle-Gitter, einer Gitteranordnung, einem Prisma, einem Interferometer, und jedweder Kombination davon.

Der Detektor oder falls für die Applikation erforderlich die Detektoren, detektieren das optische Signal, d.h. das Messsignal und führen es einer Auswerteeinheit zu, um ein zur Beschleunigung korrespondierendes Signal zu erzeugen. Typischerweise detektiert der Detektor eine Intensität elektromagnetischer Strahlung, wobei ausschließlich eine Intensitätsmessung durchgeführt werden kann oder alternative auch eine spektral aufgelöste Intensitätsmessung durchgeführt werden kann.

FIG. 9 zeigt ein Ablaufdiagramm eines Messverfahrens zur Detektion einer Beschleunigung gemäß hier beschriebenen Ausführungsformen. In Schritt 902 wird elektromagnetische Strahlung in eine Vorrichtung zum Detektieren einer Beschleunigung gemäß den hier beschriebenen Ausführungsformen eingestrahlt. In Schritt 904 wird das optische Signal, d.h. das Sekundärlicht bzw. Messlicht) erfasst, das durch die von der Vorrichtung beeinflusste elektromagnetische Strahlung zur Verfügung gestellt wird. In Schritt 906 wird das optische Signal ausgewertet um zu einem zur Beschleunigung korrespondierenden Signal zu gelangen.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

## Patentansprüche

1. Eine Vorrichtung (200) zum Detektieren einer Beschleunigung, umfassend:

   einen Rahmen (302);
   eine Masse (202);
   eine mit der Masse (202) verbundenen Hebelarm (206), wobei die Masse (202) an einer ersten Hebelposition zur Verfügung gestellt ist;
   eine optische Faser (104) mit einem faseroptischen Sensor; und
   ein Kompensationselement für Störgrößen, wobei das Kompensationselement für Störgrößen mit dem Hebelarm (206) oder der Masse (202) und wobei das Kompensationselement für Störgrößen mit dem Rahmen (302) verbunden ist, wobei das Kompensationselement eine Faserhalterung (204) umfasst, die unabhängig von dem Hebelarm (206) zur Verfügung gestellt ist, wobei die optische Faser (104) mit der Faserhalterung (204) verbunden ist.

2. Die Vorrichtung gemäß Anspruch 1, wobei das Kompensationselement ein Temperaturkompensationselement ist.

3. Die Vorrichtung gemäß einem der Ansprüche 1 bis 2, wobei die Faserhalterung (204) mit dem Rahmen (302) verbunden ist, so dass die Masse (202) mit dem Hebelarm (206), der Hebelarm (206) mit der Faserhalterung (204), und die Faserhalterung (204) mit dem Rahmen (302) verbunden ist.

4. Die Vorrichtung gemäß Anspruch 3, wobei der Hebelarm (206) direkt oder mittels der Faserhalterung (204) an einem Fixpunkt (222) derart befestigt ist, dass eine Drehung um eine Drehachse erfolgt.

5. Die Vorrichtung gemäß Anspruch 4, wobei die Drehung um eine raumfeste Drehachse (522) erfolgt.

6. Die Vorrichtung gemäß einem der Ansprüche 1 bis 5, wobei der thermische Ausdehnungskoeffizient des Rahmens (302) mindestens einen Faktor 1,5 kleiner ist als der thermische Ausdehnungskoeffizient des Kompensationselements für Störgrößen.

7. Die Vorrichtung gemäß einem der Ansprüche 1 bis 6, wobei das Kompensationselement des Weiteren ein Dämpfungselement (602) in Form eines Stabes umfasst.

8. Die Vorrichtung gemäß Anspruch 7, wobei der Stab zwischen dem Hebelarm und dem Rahmen oder zwischen der Masse und dem Rahmen (302) oder, falls vorhanden, zwischen der Faserhalterung (204) und dem Rahmen (302) zur Verfügung gestellt ist.

**9.** Die Vorrichtung gemäß einem der Ansprüche 7 bis 8, wobei der Stab vorgespannt ist und/oder wobei der Stab Silikon umfasst.

**10.** Die Vorrichtung gemäß einem der Ansprüche 1 bis 9, wobei die optische Faser (104) an einer zweiten Hebelposition mit dem Hebelarm (206) oder der Faserhalterung (204) verbunden ist.

**11.** Eine Vorrichtung zum Detektieren einer Beschleunigung in zumindest zwei Raumrichtungen, umfassend:
zumindest zwei Vorrichtungen (200) gemäß einem der Ansprüche 1 bis 10, insbesondere drei Vorrichtungen (200) gemäß einem der Ansprüche 1 bis 10, wobei die jeweiligen Rahmen (302) der zumindest zwei Vorrichtungen (200) miteinander verbunden sind.

**12.** Ein Verfahren zum Detektieren einer Beschleunigung, umfassend:

einstrahlen (902) von elektromagnetischer Strahlung in eine Vorrichtung (200) gemäß einem der Ansprüche 1 bis 11;
erfassen (904) eines optischen Signals, das durch die von der Vorrichtung (200) beeinflusste elektromagnetische Strahlung zur Verfügung gestellt wird; und
auswerten (906) des optischen Signals.

**Claims**

**1.** A device (200) for detecting an acceleration, comprising:

a frame (302);
a mass (202);
a lever arm (206) connected to the mass (202), wherein the mass (202) is provided at a first lever position;
an optical fiber (104) with a fiber-optic sensor; and
a compensation element for disturbance variables, wherein the compensation element for disturbance variables is connected to the lever arm (206) or the mass (202) and wherein the compensation element for disturbance variables is connected to the frame (302),
wherein the compensation element comprises a fiber holder (204) which is provided independent from the lever arm (206), wherein the optical fiber (104) is connected to the fiber holder (204).

**2.** The device according to claim 1, wherein the compensation element is a temperature compensation element.

**3.** The device according to any one of claims 1 to 2, wherein the fiber holder (204) is connected to the frame (302) so that the mass (202) is connected to the lever arm (206), the lever arm (206) is connected to the fiber holder (204) and the fiber holder (204) is connected to the frame (302).

**4.** The device according to claim 3, wherein the lever arm (206) is fixed to a fixed point (222) directly or by means of the fiber holder (204) so that there is a rotation about an axis of rotation.

**5.** The device according to claim 4, wherein the rotation is about a spatially fixed axis of rotation (522).

**6.** The device according to any one of claims 1 to 5, wherein the thermal expansion coefficient of the frame (302) is smaller than the thermal expansion coefficient of the compensation element for disturbance variables by at least a factor of 1.5.

**7.** The device according to any one of claims 1 to 6, wherein the compensation element further comprises a damping element (602) in the shape of a rod.

**8.** The device according to claim 7, wherein the rod is provided between the lever arm and the frame or between the mass and the frame (302) or, if available, between the fiber holder (204) and the frame (302).

**9.** The device according to any one of claims 7 to 8, wherein the rod is pre-tensioned and/or wherein the rod comprises silicone.

**10.** The device according to any one of claims 1 to 9, wherein the optical fiber (104) is connected to the lever arm (206) or the fiber holder (204) at a second lever position.

**11.** A device for detecting an acceleration in at least two spatial directions, comprising:
at least two devices (200) according to any one of claims 1 to 10, in particular three devices (200) according to any one of claims 1 to 10, wherein the respective frames (302) of the at least two devices (200) are connected to one another.

**12.** A method for detecting an acceleration, comprising:

radiating (902) electromagnetic radiation into a device (200) according to any one of claims 1 to 11;
sensing (904) an optical signal which is provided by the electromagnetic radiation influenced by the device (200); and evaluating (906) the optical signal.

## Revendications

1. Dispositif (200) de détection d'accélération, comprenant :

   un cadre (302) ;
   une masse (202) ;
   un bras de levier (206) relié à la masse (202), dans lequel la masse (202) est prévue dans une première position de levier ;
   une fibre optique (104) dotée d'un capteur à fibre optique ; et un élément de compensation pour perturbations, dans lequel l'élément de compensation pour perturbations est relié au bras de levier (206) ou à la masse (202) et dans lequel l'élément de compensation pour perturbations est relié au cadre (302),
   dans lequel l'élément de compensation comprend un support de fibre (204) prévu indépendamment du bras de levier (206), dans lequel la fibre optique (104) est reliée au support de fibre (204) .

2. Dispositif selon la revendication 1, dans lequel l'élément de compensation est un élément de compensation de température.

3. Dispositif selon l'une quelconque des revendications 1 et 2, dans lequel le support de fibre (204) est relié au cadre (302) de sorte que la masse (202) est reliée au bras de levier (206), le bras de levier (206) est relié au support de fibre (204), et le support de fibre (204) est relié au cadre (302).

4. Dispositif selon la revendication 3, dans lequel le bras de levier (206) est fixé directement ou au moyen du support de fibre (204) à un point fixe (222) de sorte que la rotation s'effectue autour d'un axe de rotation.

5. Dispositif selon la revendication 4, dans lequel la rotation s'effectue autour d'un axe de rotation fixe (522).

6. Dispositif selon l'une quelconque des revendications 1 à 5, dans lequel le coefficient de dilatation thermique du cadre (302) est au moins inférieur d'un facteur 1,5 au coefficient de dilatation thermique de l'élément de compensation pour perturbations.

7. Dispositif selon l'une quelconque des revendications 1 à 6, dans lequel l'élément de compensation comprend en outre un élément amortisseur (602) en forme de tige.

8. Dispositif selon la revendication 7, dans lequel la tige est prévue entre le bras de levier et le cadre, ou entre la masse et le cadre (302), ou, le cas échéant, entre le support de fibre (204) et le cadre (302).

9. Dispositif selon l'une quelconque des revendications 7 et 8, dans lequel la tige est précontrainte et/ou dans lequel la tige comprend du silicone.

10. Dispositif selon l'une quelconque des revendications 1 à 9, dans lequel la fibre optique (104) est reliée au bras de levier (206) ou au support de fibre (204) dans une seconde position de levier.

11. Dispositif de détection d'accélération dans au moins deux directions spatiales, comprenant :
    au moins deux dispositifs (200) selon l'une quelconque des revendications 1 à 10, en particulier trois dispositifs (200) selon l'une quelconque des revendications 1 à 10, dans lequel les cadres (302) respectifs des au moins deux dispositifs (200) sont reliés les uns aux autres.

12. Procédé de détcection d'accélération, comprenant :

    l'émission (902) d'un rayonnement électromagnétique dans un dispositif (200) selon l'une quelconque des revendications 1 à 11 ;
    la détection (904) d'un signal optique fourni par le rayonnement électromagnétique influencé par le dispositif (200) ; et l'évaluation (906) du signal optique.

Fig. 1

Fig. 2

Fig. 3A

Fig. 3B

Fig. 3C

Fig. 4

Fig. 5

Fig. 6A

Fig. 6B

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101285847 A
- US 20040237648 A1
- WO 2010057247 A1
- CN 102128952 A